# EUROPÄISCHE PATENTSCHRIFT

(11) **EP 2 206 914 B1**
(45) Veröffentlichungstag und Bekanntmachung des Hinweises auf die Patenterteilung: **08.04.2015**
(21) Anmeldenummer: 09172325.4
(22) Anmeldetag: 06.10.2009
(51) Int. Cl.: F03B 11/00, F03B 11/08, E02B 5/08

(54) **Verfahren zum Betrieb einer Wasserkraftwerksanlage**
Method for operating a water power plant assembly
Procédé destiné au fonctionnement d'une centrale hydroélectrique

(30) Priorität: 23.12.2008 AT 7482008
(43) Veröffentlichungstag der Anmeldung: 14.07.2010
(73) Patentinhaber: Jank, Siegfried, 5222 Jeging (AT)
(72) Erfinder: Jank, Siegfried, 5222 Jeging (AT)
(74) Vertreter: Henhapel, Bernhard

(56) Entgegenhaltungen:
- AT-U1- 6 811
- DE-A1-102005 028 300
- US-A- 3 282 430
- US-A1- 2002 185 422

## Beschreibung

Die Erfindung bezieht sich auf ein Verfahren zum Betrieb einer Wasserkraftwerksanlage mit einem zu mindestens einer Turbine führenden Kraftwerkszulauf, innerhalb welchem eine Rechenvorrichtung zum Auffangen von Schmutzstoffen, welche von den Kraftwerkszulauf passierendem Triebwasser mitgeführt werden, angeordnet ist, wobei an der mindestens einen Turbine für eine begrenzte Zeitdauer ein Spülprogramm, d.i. eine vom Regelbetrieb der mindestens einen Turbine abweichende, eine Loslösung von an der mindestens einen Turbine anhaftenden Schmutzstoffen ermöglichenden Betriebsführung der Turbine(n) durchgeführt wird, gemäß dem Oberbegriff des Anspruchs 1.

Die Druckschrift DE 10 2005 028 300 A1 wird als nächstliegender Stand der Technik angesehen.

Die Produktion von elektrischer Energie erfolgt im alpinen Raum zu einem großen Teil durch die Nutzung von Wasserkraft. Auch in flacherem Gelände finden Wasserkraftwerksanlagen, welche beispielsweise mit Francis- oder Kaplanturbinen bestückt sind, Einsatz, um die kinetische Energie des Wassers über Generatoren in elektrische Energie umzuwandeln.

Die zum Antrieb der Turbinen notwendige Wasserentnahme aus dem Flussbett erfolgt dabei durch eine oder mehrere Wasserfassungen beliebiger Bauart, im Folgenden Kraftwerkszulauf genannt.

Innerhalb des Kraftwerkszulaufs ist üblicherweise eine Rechenvorrichtung angeordnet, welche dazu dient, das den Kraftwerkszulauf passierende Triebwasser von Treibgut und Schwebstoffen, im Folgenden als Schmutzstoffe bezeichnet, zu reinigen. Hierbei wird ein Weitertransport der Schmutzstoffe in Richtung der Turbine weitgehend verhindert, indem die Schmutzstoffe 11 durch Stab- oder Gitterelemente der Rechenvorrichtung aufgefangen werden.

Gattungsgemäße Rechenvorrichtungen verlaufen üblicherweise vertikal und im Wesentlichen quer zur Strömungsrichtung des Triebwassers, wobei die gesamte Breite des Kraftwerkszulaufs abgedeckt wird.

Aufgrund der Vorsehung derartiger Rechenvorrichtungen wird einerseits im Kraftwerkszulauf befindlichen Menschen und Tieren ein Schutz vor einem Mitgerissenwerden in den Operationsbereich der Turbine durch das Triebwasser geboten, andererseits wird dadurch eine Beschädigung bzw. Abrasion von Bauteilen der Turbine durch schädliches Treibgut verhindert und eine den Wirkungsgrad und somit die Leistung der Wasserkraftwerksanlage herabsetzende Verschmutzung der Turbine kann reduziert werden.

Jedoch kann es selbst durch Rechenvorrichtungen mit sehr geringer Rechenstab- bzw. Gitterlichte nicht verhindert werden, dass ein gewisses Quantum der Schmutzstoffe die Rechenvorrichtung passiert und solcherart die Turbine verschmutzt. Insbesondere an den Turbinenschaufeln setzen sich im Laufe der Zeit Schmutzstoffe an und bilden einen die Turbinenleistung beeinträchtigenden Belag.

Um diesen durch Schmutzstoffe gebildeten Belag wieder von der Turbine zu entfernen, wird an der Turbine für eine begrenzte Zeitdauer ein Spülprogramm durchgeführt. Unter einem Spülprogramm wird im vorliegenden Zusammenhang eine vom Regelbetrieb der Turbine abweichende Betriebsführung der Turbine verstanden, welche eine Loslösung von an der Turbine anhaftenden Schmutzstoffen ermöglicht.

So ist es etwa möglich, die Stellung bzw. Neigung der Turbinenschaufeln oder der Leiträder und somit den Anstrahlwinkel der Turbinenschaufeln gegenüber dem Regelbetrieb kurzzeitig zu verändern und dadurch schockartige Impulse des Triebwassers auf die Turbine zu bewirken, was wiederum eine Loslösung und ein Wegspülen eines Großteils der an der Turbine anhaftenden Schmutzstoffe zur Folge hat.

Welche konkreten Maßnahmen gesetzt werden, um ein Spülprogramm zu realisieren, obliegt dem Fachmann und kann dem Stand der Technik entnommen werden.

Bei Wasserkraftwerksanlagen gemäß dem Stand der Technik werden beschriebene Spülprogramme üblicherweise nach festgesetzten Intervallzeiten wiederholt, d.h. es findet ein statisch determinierter Reinigungsplan Einsatz. Hierbei ergibt sich der Nachteil, dass in Zeiten, in welchen das Triebwasser annähernd frei von Schmutzstoffen ist, das Spülprogramm in unnötiger Häufigkeit vollzogen wird. Andererseits kann es in Zeiten, in welchen das Triebwasser eine große Menge an Schmutzstoffen mit sich führt, der Fall sein, dass die fix eingestellten Intervalle zwischen den Spülprogrammen zu lange sind, während eine häufigere Frequenz der Spülprogrammaktivierung wünschenswert wäre.

Es sind auch Wasserkraftwerksanlagen bekannt, bei welchen die Turbine mit einer Auswerte- und Steuereinheit verknüpft ist, welche aufgrund komplexer hinterlegter Leistungskurven einen Abfall des Wirkungsgrades der Turbine erkennt und ab einem gewissen Wirkungsgrad- bzw. Leistungsdefizit das Spülprogramm startet. Diese Variante der Spülprogrammaktivierung hat den Nachteil, dass sie aufgrund der vielen Einflussfaktoren einer Wasserkraftwerksanlage nur sehr schwer zu beherrschen ist und keine sichere Aussage über den tatsächlich an der Turbine vorliegenden Verschmutzungsgrad zulässt. Oftmals wird das Spülprogramm erst bei relativ großen Abweichungen jeweils herangezogener Leistungsindikatoren ausgelöst und auf ein aktuelles Verschmutzungsproblem der Turbinen wird nicht angemessen rasch reagiert.

Der vorliegenden Erfindung liegt daher die Aufgabe zugrunde, die genannten Nachteile zu verhindern und eine einfache und dennoch zuverlässige Erfassung des Verschmutzungsgrades der Turbine(n) einer Wasserkraftwerksanlage zu ermöglichen. Der Einsatz von Turbinen-Spülprogrammen soll betriebtechnisch optimiert werden, um eine möglichst konstante und effiziente Turbinenleistung zu erzielen.

Erfindungsgemäß wird diese Aufgabe durch ein Verfahren kennzeichnenden Merkmalen des Anspruchs 1 gelöst.

Anspruch 1 beschreibt ein Verfahren zum Betrieb einer Wasserkraftwerksanlage mit einem zu mindestens einer Turbine führenden Kraftwerkszulauf, innerhalb welchem eine Rechenvorrichtung zum Auffangen von Schmutzstoffen, welche von den Kraftwerkszulauf passierendem Triebwasser mitgeführt werden, angeordnet ist, wobei an der mindestens einen Turbine für eine begrenzte Zeitdauer ein Spülprogramm, d.i. eine vom Regelbetrieb der mindestens einen Turbine abweichende, eine Loslösung von an der Turbine anhaftenden Schmutzstoffen ermöglichenden Betriebsführung der Turbine(n) durchgeführt wird. Erfindungsgemäß ist es vorgesehen, dass ein durch anhaftende Schmutzstoffe verursachter Verschmutzungsgrad der Rechenvorrichtung ermittelt und als Indikator für einen an der mindestens einen Turbine vorliegenden Verschmutzungsgrad herangezogen wird, wobei das Spülprogramm in Abhängigkeit des ermittelten Verschmutzungsgrades der Rechenvorrichtung ausgelöst wird.

Die Heranziehung des Verschmutzungsgrades der Rechenvorrichtung als Indikator für einen an der mindestens einen Turbine vorliegenden Verschmutzungsgrad ermöglicht eine einfache und schnelle Beurteilung des Verschmutzungsgrades der Turbine bzw. des aktuellen Verschmutzungsgrades des zur Turbine fließenden Triebwassers.

Zeitpunkte, Zeitdauer und Frequenz der Turbinen-Spülprogramme können fortan den aktuellen Erfordernissen des Turbinenbetriebs exakt angepasst werden. Im Gegensatz zu Verfahren gemäß dem Stand der Technik können auf erfindungsgemäße Weise auch relativ geringe Verschmutzungen der Turbine abgeschätzt oder bestimmt und ohne relevanter Verzögerung beseitigt werden.

Auf diese Weise wird ein leistungsoptimierter Turbinenbetrieb ermöglicht.

Der Zusammenhang zwischen dem Verschmutzungsgrad der Rechenvorrichtung und dem Verschmutzungsgrad der Turbine kann durch ein beliebig festgesetztes Äquivalenzsystem, z.B. durch eine lineare oder sonstige mathematische Funktion definiert sein. Unabhängig vom konkret angewandten Äquivalenzsystem ist es jedenfalls die Tatsache, dass sich der (aktuelle) Verschmutzungsgrad der Turbine vom (aktuellen) Verschmutzungsgrad der Rechenvorrichtung ableiten lässt, welche durch die vorliegende Erfindung nutzbar gemacht wird.

Mit anderen Worten ausgedrückt, wird die Notwendigkeit zur Durchführung eines Turbinen-Spülprogramms direkt am Zustand der Rechenvorrichtung abgelesen.

In einer besonders bevorzugten Ausführungsvariante der Erfindung wird der Verschmutzungsgrad der Rechenvorrichtung anhand der Aktivierung einer zumeist standardmäßig an gattungsgemäßen Rechenvorrichtungen angeordneten Rechenreinigungsvorrichtung bestimmt. Derartige Rechenreinigungsvorrichtungen dienen dazu, um an der Rechenvorrichtung anhaftende Schmutzstoffe zu entfernen, wobei dem Fachmann wiederum verschiedenste konstruktive Ausführungen einer Rechenreinigungsvorrichtung bekannt sind. Zumeist handelt es sich bei der Rechenreinigungsvorrichtung um eine hydraulisch, pneumatisch oder mittels eines elektrischen Stellantriebs bewegbare gabelartige Vorrichtung, welche in Durchlassöffnungen der Rechenvorrichtung eingreifen und diese von anhaftenden Schmutzstoffen befreien kann. Eine alternative Ausgestaltung der Rechenreinigungsvorrichtung z.B. in Düsenform ist ebenfalls denkbar.

Unabhängig von der konkreten konstruktiven Ausführung der Rechenreinigungsvorrichtung ist es erfindungsgemäß vorgesehen, dass der Verschmutzungsgrad der Rechenvorrichtung und somit des Triebwassers anhand der innerhalb eines definierten Zeitraums registrierten Häufigkeit einer Aktivierung der Rechenreinigungsvorrichtung ermittelt wird. Eine Aktivierung der Rechenreinigungsvorrichtung erfolgt vorzugsweise selbsttätig in Abhängigkeit von voreingestellten Parametern, kann jedoch auch manuell, z.B. nach einer Sichtkontrolle durch eine fachkundige Person durchgeführt werden.

Indem also die Frequenz der Aktivierung der Rechenreinigungsvorrichtung erfasst wird, bedarf es keiner weiteren Apparaturen oder Auswerteeinheiten, um eine Aussage über den Verschmutzungsgrad der Rechenvorrichtung zu treffen. Eine auf der Frequenz der Rechenreinigungsvorrichtungs-Aktivierung basierende Verfahrensvariante zur Auslösung des Turbinen-Spülprogramms ist daher besonders einfach und kostengünstig.

In einer alternativen Verfahrensvariante kann der der Verschmutzungsgrad der Rechenvorrichtung und somit der Zeitpunkt zur Aktivierung des Turbinen-Spülprogramms anhand eines im Bereich der Rechenvorrichtung vorhandenen Pegelstandes des Triebwassers, vorzugsweise in Abhängigkeit des Erreichens einer definierten Differenz zwischen einem der Rechenvorrichtung - betrachtet in Flussrichtung des Triebwassers - vorgelagerten Pegelstand und einem der Rechenvorrichtung nachgelagerten Pegelstand, ermittelt werden. Bei dieser Verfahrensvariante wird das Turbinen-Spülprogramm also dann aktiviert, wenn sich das Triebwasser vor der Rechenvorrichtung über ein definiertes Maß hinaus staut. Auch eine solche Verfahrensvariante ist zuverlässig und kostengünstig, zumal Pegelmessvorrichtungen bereits standardmäßig im Kraftwerkszulauf installiert sind.

Alternativ zu den voranstehend beschriebenen Verfahrensvarianten zur Ermittlung des Verschmutzungsgrades der Rechenvorrichtung ist es auch möglich, den Verschmutzungsgrad der Rechenvorrichtung durch andere Maßnahmen, z.B. durch Vorsehung einer die Rechenvorrichtung überwachenden Kamera, welche mit einer Bildauswerteeiheit assoziiert ist, zu ermitteln. Durch optoelektronische Bildauswerteverfahren ist eine kontinuierliche Datenerfassung möglich und es kann eine besonders schnelle Adaption der Spülprogramm-Modalitäten erfolgen.

Wann das Spülprogramm aktiviert wird, kann in Abhängigkeit diverser betriebstechnischer Gesichtspunkte beliebig festgelegt werden.

In einer einfachsten Verfahrensvariante erfolgt die Auslösung des Spülprogramms unmittelbar dann, wenn ein Verschmutzungsgrad der Rechenvorrichtung ermittelt wurde, welcher höher ist als ein festgelegter Grenzwert bzw. ein Referenz-Verschmutzungsgrad.

An dieser Stelle sei angemerkt, dass der "festgelegte" Grenzwert auch dynamisch festlegbar ist, d.h. im Laufe des Turbinenbetriebs in Abhängigkeit von Betriebsparametern oder auch willkürlich änderbar ist.

Hinsichtlich einer Koordination mit weiteren Funktionen des Turbinen- bzw. Kraftwerksbetriebs ist es jedoch oft vorteilhaft, wenn die Auslösung des Spülprogramms zeitverzögert zur Feststellung, dass der Verschmutzungsgrad der Rechenvorrichtung einen festgelegten Grenzwert erreicht hat, erfolgt. Vorzugsweise wird das Spülprogramm in Zusammenhang mit einer mittels der Rechenreinigungsvorrichtung vollzogenen Reinigung der Rechenvorrichtung durchgeführt. Das Spülprogramm wird hierbei in Zusammenhang mit jenem Rechenreinigungsvorgang durchgeführt, welcher zeitlich gesehen am nächsten zum Zeitpunkt der Feststellung, dass der Verschmutzungsgrad der Rechenvorrichtung einen festgelegten Grenzwert erreicht hat, durchgeführt.

In einer bevorzugten Verfahrensvariante wird das Turbinen-Spülprogramm nach Beendigung einer mittels der Rechenreinigungsvorrichtung vollzogenen Reinigung der Rechenvorrichtung durchgeführt. Das Turbinen-Spülprogramm kann hierbei entweder unmittelbar nach der vollendeten Reinigung der Rechenvorrichtung durchgeführt werden oder erst zu einem Zeitpunkt, an welchem die überwiegende Menge der mittels der Rechenreinigungsvorrichtung von der Rechenvorrichtung gelösten Schmutzstoffe die mindestens eine Turbine bereits passiert hat. Im letzteren Falle ergibt sich der Vorteil, dass Schmutzstoffe, die während der Rechenreinigung durch die Rechenvorrichtung gedrückt werden die Turbine(n) bereits passiert haben und allfällige durch die Rechenreinigung bedingte Neuverschmutzungen der Turbine(n) ebenfalls durch das aktivierte Turbinen-Spülprogramm beseitigt werden.

Jener Zeitpunkt, an welchem die überwiegende Menge der mittels der Rechenreinigungsvorrichtung von der Rechenvorrichtung gelösten Schmutzstoffe die Turbine passiert hat, kann durch beliebige Ermittlungsverfahren festgestellt werden.

Bevorzugt ist jedoch eine rechnerische Ermittlung jenes Zeitpunktes, an welchem die von der Rechenvorrichtung gelösten Schmutzstoffe die Turbine(n) passiert haben. Hierbei kann jener Zeitpunkt anhand des aktuell gemessenen Volumenstroms bzw. der Geschwindigkeit des die Schmutzstoffe führenden Triebwassers und der zwischen der Rechenvorrichtung und der mindestens einen Turbine vorhandenen Distanz, also über eine Weg-Zeit-Rechnung, errechnet wird.

In einer Weiterentwicklung des erfindungsgemäßen Verfahrens werden zur Detektion des Verschmutzungsgrades der Rechenvorrichtung ein oder mehrere ausgewählte Abschnitte der Rechenvorrichtung herangezogen. Indem also nicht die gesamte Rechenvorrichtung hinsichtlich einer Verschmutzung überwacht wird, sondern lediglich ein charakteristischer Bereich ebendieser, kann der zum optimierten Betrieb des Turbinen-Spülprogramms erforderliche Datenerhebungsaufwand minimiert werden.

Die Erfindung wird nun anhand eines Ausführungsbeispiels näher erläutert. Dabei zeigt:

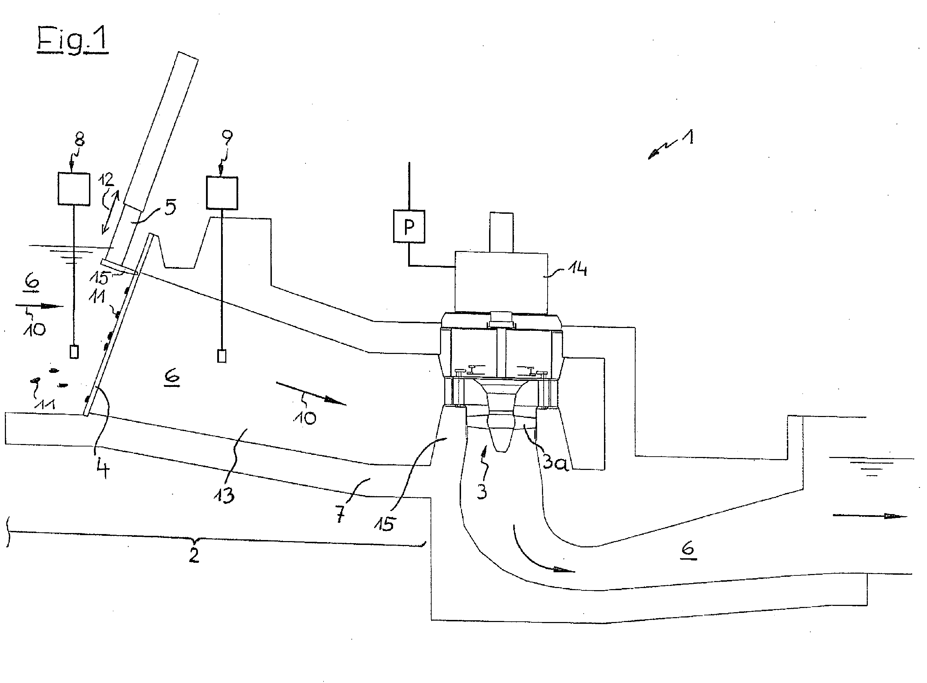

- Fig.1: eine schematische Darstellung einer Wasserkraftwerksanlage in vertikaler Schnittdarstellung

Fig.1 zeigt in schematischer Weise eine Wasserkraftwerksanlage 1 mit einem Kraftwerkszulauf 2, mittels welchem einem Flussbett Triebwasser 6 zum Antrieb einer Turbine 3 entnommen wird. Gemäß dem vorliegenden Ausführungsbeispiel wird das Triebwasser 6 über einen schachtförmigen Triebwasserkanal 13, welcher Teil des Kraftwerkszulauf 2 ist, zu den Turbinenschaufeln 3a einer vertikal gelagerten Turbine 3 geführt. Zur Kanalisierung des Triebwassers 6 dient ein z.B. aus Beton gefertigtes, eine Staumauer 15 umfassendes Wasserfassungsbauwerk 7.

Die kinetische Energie des Wassers wird in bekannter Weise über einen mit der Turbine 4 gekuppelten Generatore 14 in elektrische Energie umgewandelt.

Die Wasserkraftwerksanlage 1 kann eine beliebige Anzahl an nebeneinander oder hintereinander angeordneten Turbinen 3 umfassen, ebenso kann der Kraftwerkszulauf 2 in mehrere Abschnitte unterteilt sein bzw. mehrere Triebwasserkanäle 13 umfassen.

Um das in Strömungsrichtung 10 fließende Triebwasser 6 möglichst zu reinigen, bevor es mit der Turbine 3 in Kontakt kommt, ist innerhalb des Kraftwerkszulaufs 2 eine Rechenvorrichtung 4 angeordnet. Die Rechenvorrichtung 4 umfasst eine Vielzahl an Rechenelementen, welche z.B. kamm- oder gitterförmig angeordnet sind und auf diese Weise im Triebwasser 6 befindliche Schmutzstoffe 11, das sind insbesondere Blätter, Holzstücke und Schwebstoffe, auffangen.

Die Rechenvorrichtung 4 erstreckt sich im Wesentlichen quer zur Strömungsrichtung 10 des Triebwassers 6 über die gesamte, in der Seitenansicht gemäß Fig.1 nicht ersichtliche Breite des Kraftwerkszulaufs 2. Hierbei ist gemäß Fig.1 eine geringfügige Neigung der Rechenvorrichtung 4 gegenüber der Vertikalen vorgesehen.

Die in Fig.1 lediglich schematisch dargestellte Rechenvorrichtung 4 kann in der Praxis auch mehrteilig bzw. mehrstufig ausgeführt sein, z.B. in Form von in Strömungsrichtung 10 des Triebwassers 6 hintereinander angeordneten Grob- und Feinrechen.

Um die Funktionsweise des Kraftwerkszulaufs 2 aufrechtzuerhalten, müssen die an der Rechenvorrichtung 4 abgelagerten Schmutzstoffe 11 bei Bedarf durch eine Rechenreinigungsvorrichtung 5 entfernt werden.

Die Rechenreinigungsvorrichtung 5 umfasst hydraulisch, pneumatisch oder mittels eines elektrischen Stellantriebs bewegbare Eingriffselemente 15, welche eine zu nicht dargestellten Durchlassöffnungen der Rechenvorrichtung 4 komplementäre Geometrie aufweisen. Im vorliegenden Ausführungsbeispiel sind die Eingriffselemente 15 translatorisch in einer im Wesentlichen parallel zur Höhenerstreckung der Rechenvorrichtung 4 verlaufenden Bewegungsrichtung 12 verstellbar und durchkämmen solcherart im Betätigungsfalle die aus stabförmigen Rechenelementen konstituierte Rechenvorrichtung 4.

Eine alternative Ausgestaltung der Rechenreinigungsvorrichtung 5 z.B. in Düsenform wäre ebenfalls möglich.

Da besonders feine Schmutzstoffe 11 die Durchlassöffnungen der Rechenvorrichtung 4 gemeinsam mit dem Triebwasser 6 passieren, wird die Turbine 3, im Laufe der Zeit mit Schmutzstoffen 11 behaftet.

Um die Turbine 3, insbesondere die Turbinenschaufeln 3a von diesen anhaftenden Schmutzstoffen 11 wieder zu befreien, ist es möglich, an der Turbine 3 ein Spülprogramm durchzuführen. Ein solches Spülprogramm ist eine vom Regelbetrieb der Turbine 3 abweichende, für eine begrenzte Zeitdauer durchgeführte Betriebsführung der Turbine 3, welche eine Loslösung von an der Turbine 3 anhaftenden Schmutzstoffen ermöglicht.

Dem Fachmann sind verschiedene Möglichkeiten bekannt, um ein derartiges Spülprogramm umzusetzen.

So ist es etwa möglich, die Stellung bzw. Neigung der Turbinenschaufeln 3a oder den Anstrahlwinkel der Turbinenschaufeln 3a gegenüber dem Regelbetrieb der Turbine 3 kurzzeitig zu verändern und dadurch Impulse des Triebwassers 6 auf die Turbine 3 zu bewirken, um eine Loslösung und ein Wegspülen der an der Turbine 3 anhaftenden Schmutzstoffe 11 zu erzielen.

Es versteht sich, dass das Spülprogramm auch aus mehreren, sequentiell ablaufenden Sub-Spülprogrammen bzw. aus unterschiedlichen Reinigungsmaßnahmen bestehen kann.

Um den Verschmutzungsgrad der Turbine 3 zuverlässig zu erfassen und um Leistungsverluste der Turbine 3 zu minimieren, ist es erfindungsgemäß vorgesehen, dass ein durch anhaftende Schmutzstoffe verursachter Verschmutzungsgrad der Rechenvorrichtung 4 ermittelt und als Indikator für einen an der mindestens einen Turbine 3 vorliegenden Verschmutzungsgrad bzw. für einen Verschmutzungsgrad des Triebwassers 6 herangezogen wird. Das Spülprogramm wird in Abhängigkeit des ermittelten Verschmutzungsgrades der Rechenvorrichtung 4 ausgelöst.

Zur Beurteilung des Verschmutzungsgrades der Rechenvorrichtung 4 bzw. des Verschmutzungsgrades der Turbine 3 können beliebige Referenzgrößen festgesetzt werden.

Es muss nicht notwendigerweise ein linearer bzw. direkt proportionaler Zusammenhang zwischen dem Verschmutzungsgrad der Rechenvorrichtung 4 und dem Verschmutzungsgrad der Turbine 3 vorliegen. Hingegen kann dieser Zusammenhang durch geeignete Formeln und/oder durch Erfahrungswerte hergestellt sein.

Der Verschmutzungsgrad der Rechenvorrichtung (4) kann durch beliebige Maßeinheiten oder Bezugsgrößen definiert sein, so etwa durch prozentuale Werte, Flächenwerte oder Gewichtswerte.

Gemäß einer besonders bevorzugten Ausführungsvariante der Erfindung ist es vorgesehen, dass der Verschmutzungsgrad der Rechenvorrichtung 4 und somit des Triebwassers 6 anhand der innerhalb eines definierten Zeitraums registrierten Häufigkeit einer Aktivierung der Rechenreinigungsvorrichtung 5 ermittelt wird. Eine Aktivierung der Rechenreinigungsvorrichtung 5 erfolgt vorzugsweise selbsttätig in Abhängigkeit von voreingestellten Parametern, kann jedoch auch manuell durchgeführt werden.

Unabhängig von der Art der Aktivierung ist es also die Frequenz der Aktivierung der Rechenreinigungsvorrichtung 5, welche erfindungsgemäß erfasst wird, um eine Entscheidungsgrundlage hinsichtlich des optimalen Zeitpunkts zur Durchführung eines Turbinen-Spülprogramms zu erhalten.

Die Registrierung der Aktivierung der Rechenreinigungsvorrichtung 5 wird durch konventionelle Datenübertragungstechnik durchgeführt. Eine prozessorgesteuerte Auswerteeinheit erhält jedes Mal ein Informationssignal, wenn die Rechenreinigungsvorrichtung 5 aktiviert wurde und speichert dieses Informationssignal. Die Auswerteeinheit kann auch zusätzliche Daten sammeln, z.B. Daten über den Zeitpunkt, die Zeitdauer oder spezifische Betriebsdaten.

In einer alternativen Verfahrensvariante kann der der Verschmutzungsgrad der Rechenvorrichtung 4 und somit der Zeitpunkt zur Aktivierung des Turbinen-Spülprogramms anhand eines im Bereich der Rechenvorrichtung 4 vorhandenen Pegelstandes 8, 9 des Triebwassers 6 ermittelt werden. Mit anderen Worten wird das Turbinen-Spülprogramm bei dieser Verfahrensvariante dann aktiviert, wenn sich das Triebwasser 6 an der Rechenvorrichtung 4 zu stark staut.

Vorzugsweise wird der Verschmutzungsgrad der Rechenvorrichtung 4 bzw. der Zeitpunkt der Aktivierung des Turbinen-Spülprogramms hierbei in Abhängigkeit des Erreichens bzw. Überschreitens einer definierten Differenz zwischen einem der Rechenvorrichtung 4 - betrachtet in Flussrichtung 10 des Triebwassers 6 - vorgelagerten Pegelstand 8 und einem der Rechenvorrichtung 4 nachgelagerten Pegelstand 9, ermittelt.

So kann etwa das Erreichen einer Differenz zwischen dem der Rechenvorrichtung 4 vorgelagerten Pegelstand 8 und dem der Rechenvorrichtung 4 nachgelagerten Pegelstand 9 von fünf bis zwanzig Zentimeter als jenes Ereignis angesehen werden, welches die Notwendigkeit einer Aktivierung des Turbinen-Spülprogramms anzeigt.

Auch die Messung der Pegelstände 8, 9 wird mittels geeigneter, Datenübertragungstechnik durchgeführt, wobei eine prozessorgesteuerte Auswerteeinheit entsprechende digitale oder analoge Informationssignale erhält und diese speichert.

Es sei angemerkt, dass in der schematischen Darstellung gemäß Fig.1 mit den Bezugsziffern 8 und 9 nicht unmittelbar die Wasseroberfläche des Triebwassers 6 indiziert ist, sondern jeweils eine den Pegelstand vor der Rechenvorrichtung 4 messende Pegelmessvorrichtung und eine den Pegelstand nach der Rechenvorrichtung 4 messende Pegelmessvorrichtung.

Alternativ zu den voranstehend beschriebenen Verfahrensvarianten zur Ermittlung des Verschmutzungsgrades der Rechenvorrichtung 4 ist es auch möglich, den Verschmutzungsgrad der Rechenvorrichtung 4 durch andere Maßnahmen, z.B. durch Vorsehung einer die Rechenvorrichtung 4 überwachenden Kamera, welche mit einer Bildauswerteeinheit verknüpft ist, zu ermitteln.

Die tatsächliche Auslösung des Turbinen-Spülprogramms kann entweder unmittelbar nach erkannter Notwendigkeit in Form des Erreichens eines festgelegten Maximalwertes des Verschmutzungsgrades der Rechenvorrichtung 4 bzw. bei Erreichen einer festgelegten Höchstfrequenz in der Aktivierung der Rechenreinigungsvorrichtung 5 bzw. bei Erreichen einer maximal zulässigen Differenz zwischen dem der Rechenvorrichtung 4 vorgelagerten Pegelstand 8 und dem der Rechenvorrichtung 4 nachgelagerten Pegelstand 9 erfolgen.

Es ist jedoch auch möglich, die Aktivierung des Spülprogramms zeitverzögert zur Feststellung, dass der Verschmutzungsgrad der Rechenvorrichtung 4 einen festgelegten Grenzwert erreicht hat, durchzuführen, z.B. erst nach Beendigung einer mittels der Rechenreinigungsvorrichtung 5 vollzogenen Reinigung der Rechenvorrichtung 4.

Das Turbinen-Spülprogramm wird hierbei vorzugsweise erst zu einem Zeitpunkt, an welchem die überwiegende Menge der mittels der Rechenreinigungsvorrichtung 5 von der Rechenvorrichtung 4 gelösten Schmutzstoffe die Turbine 3 bereits passiert hat. Auf diese Weise ist sichergestellt, dass Schmutzstoffe 11, die während der Rechenreinigung durch die Durchlassöffnungen der Rechenvorrichtung 4 gedrückt wurden, die Turbine 3 bereits passiert haben, wenn das Turbinen-Spülprogramm startet.

Der Zeitpunkt, an welchem die überwiegende Menge der mittels der Rechenreinigungsvorrichtung 5 von der Rechenvorrichtung 4 gelösten Schmutzstoffe die Turbine 3 passiert hat, kann auf rechnerische Weise ermittelt werden, z.B. anhand des aktuell gemessenen Volumenstroms bzw. der Geschwindigkeit des die Schmutzstoffe 11 führenden Triebwassers 6. Anhand des gemessenen Volumenstroms bzw. der Geschwindigkeit Triebwassers 6 und der zwischen der Rechenvorrichtung 4 und der mindestens einen Turbine 3 vorhandenen Distanz, also über eine einfache Weg-Zeit-Rechnung, kann in weiterer Folge jener Zeitpunkt ermittelt werden, ab welchem die von der Rechenvorrichtung 4 gelösten Schmutzstoffe 11 bereits aus dem Bereich der Turbine 3 weggeschwemmt wurden.

Auch die zeitliche Dauer des Turbinen-Spülprogramms kann in Abhängigkeit des jeweils festgestellten Verschmutzungsgrades der Rechenvorrichtung 4 variabel bestimmt werden. So kann bei Vorliegen eines geringen Verschmutzungsgrades der Rechenvorrichtung 4 bzw. der Turbine 3 ein relativ kurzes Turbinen-Spülprogramm durchgeführt werden, während bei Vorliegen eines hohen Verschmutzungsgrades der Rechenvorrichtung 4 bzw. der Turbine 3 ein relativ langes Turbinen-Spülprogramm durchgeführt werden kann.

Es versteht sich, dass verschiedene Maßnahmen zur Verfeinerung bzw. Vereinfachung des beschriebenen Verfahrens denkbar sind, ohne von der erfindungsgemäßen Idee abzuweichen.

So ist es etwa möglich, dass zur Detektion des Verschmutzungsgrades der Rechenvorrichtung nicht die gesamte Rechenvorrichtung 4 überwacht wird, sondern lediglich ein oder mehrere ausgewählte Abschnitte der Rechenvorrichtung 4.

## Patentansprüche

1. Verfahren zum Betrieb einer Wasserkraftwerksanlage (1) mit einem zu mindestens einer Turbine (3) führenden Kraftwerkszulauf (2), innerhalb welchem eine Rechenvorrichtung (4) zum Auffangen von Schmutzstoffen (11), welche von den Kraftwerkszulauf (2) passierendem Triebwasser (6) mitgeführt werden, angeordnet ist, wobei an der mindestens einen Turbine (3) für eine begrenzte Zeitdauer ein Spülprogramm, d.i. eine vom Regelbetrieb der mindestens einen Turbine (3) abweichende, eine Loslösung von an der Turbine (3) anhaftenden Schmutzstoffen ermöglichenden Betriebsführung der Turbine(n) (3) durchgeführt wird, **dadurch gekennzeichnet, dass** ein durch anhaftende Schmutzstoffe verursachter Verschmutzungsgrad der Rechenvorrichtung (4) ermittelt und als Indikator für einen an der mindestens einen Turbine (3) vorliegenden Verschmutzungsgrad herangezogen wird, wobei das Spülprogramm in Abhängigkeit des ermittelten Verschmutzungsgrades der Rechenvorrichtung (4) ausgelöst wird.

2. Verfahren nach Anspruch 1, **dadurch gekennzeichnet, dass** der Verschmutzungsgrad der Rechenvorrichtung (4) anhand der innerhalb eines definierten Zeitraums registrierten Häufigkeit einer selbsttätigen oder manuellen Aktivierung einer Rechenreinigungsvorrichtung (5), mittels welcher an der Rechenvorrichtung (4) anhaftende Schmutzstoffe entfernbar sind, ermittelt wird.

3. Verfahren nach Anspruch 2, **dadurch gekennzeichnet, dass** der Verschmutzungsgrad der Rechenvorrichtung (4) anhand eines im Bereich der Rechenvorrichtung (4) vorhandenen Pegelstandes (8, 9) des Triebwassers (6), vorzugsweise in Abhängigkeit des Erreichens einer definierten Differenz zwischen einem der Rechenvorrichtung (4) - betrachtet in Flussrichtung (10) des Triebwassers (6) - vorgelagerten Pegelstand (8) und einem der Rechenvorrichtung (4) nachgelagerten Pegelstand (9), ermittelt wird.

4. Verfahren nach Anspruch 1, **dadurch gekennzeichnet, dass** die Detektion des Verschmutzungsgrades der Rechenvorrichtung (4) durch kameragestützte Bildverarbeitung erfolgt.

5. Verfahren nach Anspruch 4, **dadurch gekennzeichnet, dass** zur Detektion des Verschmutzungsgrades der Rechenvorrichtung (4) ein oder mehrere ausgewählte Abschnitte der Rechenvorrichtung (4) herangezogen werden.

6. Verfahren nach einem der Ansprüche 1 bis 5, **dadurch gekennzeichnet, dass** das Spülprogramm dann ausgelöst wird, wenn der Verschmutzungsgrad der Rechenvorrichtung (4) einen festgelegten Grenzwert erreicht hat.

7. Verfahren nach einem der Ansprüche 1 bis 5, **dadurch gekennzeichnet, dass** das Spülprogramm zeitverzögert zur Feststellung, dass der Verschmutzungsgrad der Rechenvorrichtung (4) einen festgelegten Grenzwert erreicht hat, ausgelöst wird, wobei das Spülprogramm vorzugsweise in Zusammenhang mit einer mittels der Rechenreinigungsvorrichtung (5) vollzogenen Reinigung der Rechenvorrichtung (4) zeitverzögert durchgeführt wird.

8. Verfahren nach Anspruch 7, **dadurch gekennzeichnet, dass** das Spülprogramm nach Beendigung einer mittels der Rechenreinigungsvorrichtung (5) vollzogenen Reinigung der Rechenvorrichtung (4) durchgeführt wird.

9. Verfahren nach Anspruch 8, **dadurch gekennzeichnet, dass** das Spülprogramm erst zu einem Zeitpunkt durchgeführt wird, an welchem die überwiegende Menge der mittels der Rechenreinigungsvorrichtung (5) von der Rechenvorrichtung (4) gelösten Schmutzstoffe die mindestens eine Turbine (3) bereits passiert hat.

10. Verfahren nach Anspruch 9, **dadurch gekennzeichnet, dass** jener Zeitpunkt, an welchem die überwiegende Menge der mittels der Rechenreinigungsvorrichtung (5) von der Rechenvorrichtung (4) gelösten Schmutzstoffe die mindestens eine Turbine (3) passiert hat, anhand des aktuell gemessenen Volumenstroms bzw. der Geschwindigkeit des die Schmutzstoffe führenden Triebwassers (6) und der zwischen der Rechenvorrichtung (4) und der mindestens einen Turbine (3) vorhandenen Distanz errechnet wird.

## Claims

1. A method for operating a hydroelectric power plant installation (1), comprising a power plant inflow (2) which leads to at least one turbine (3) and within which a rack apparatus (4) is arranged for collecting pollutants (11) which are entrained by the works water (6) passing through the power plant inflow (2), wherein a rinsing program is carried out on the at least one turbine (3) for a limited period of time, i.e. an operational management of the turbine(s) (3) is carried out which departs from regular operation of the at least one turbine (3) and enables a release of pollutants adhering to the turbine (3), **characterized in that** a degree of pollution of the rake apparatus (4) caused by a adhering pollutants is determined and is used as an indicator for a degree of pollution present in the at least one turbine (3), wherein the rinsing program is triggered depending on the determined degree of pollution of the rake apparatus (4).

2. A method according to claim 1, **characterized in that** the degree of pollution of the rake apparatus (4) is determined as a function of the frequency of an automatic or manual activation of a rake cleaning apparatus (5) recorded within a defined period of time, by means of which pollutants adhering to the rake apparatus (4) are removed.

3. A method according to claim 2, **characterized in that** the degree of pollution of the rake apparatus (4) is determined as a function of a level (8, 9) of the works water (6) present in the region of the rake apparatus (4), preferably depending on reaching a defined difference between a level (8) upstream of the rake apparatus (4) as seen in the direction of flow (10) of the works water (6) and a level (9) downstream of the rake apparatus (4).

4. A method according to claim 1, **characterized in that** the detection of the degree of pollution of the rake apparatus (4) occurs by camera-supported image processing.

5. A method according to claim 4, **characterized in that** one or several selected sections of the rake apparatus (4) are used for the detection of the degree of pollution of the rake apparatus (4).

6. A method according to one of the claims 1 to 5, **characterized in that** the rinsing program is triggered when the degree of pollution of the rake apparatus (4) has reached a fixed limit value.

7. A method according to one of the claims 1 to 5, **characterized in that** the rinsing program is triggered with a time delay upon determining that the degree of pollution of the rake apparatus (4) has reached a fixed limit value, wherein the rinsing program is preferably carried out with a time delay in connection with a cleaning of the rake apparatus (4) which has been carried out by means of the rake cleaning apparatus (5).

8. A method according to claim 7, **characterized in that** the rinsing program is carried out after terminating a cleaning of the rake apparatus (4) performed by means of the rake cleaning apparatus (5).

9. A method according to claim 8, **characterized in that** the rinsing program is only carried out at a point in time at which the main quantity of the pollutants removed by means of the rake cleaning apparatus (5) from the rake apparatus (4) has already passed the at least one turbine (3).

10. A method according to claim 9, **characterized in that** the point in time at which the main quantity of the pollutants removed by means of the rake cleaning apparatus (5) from the rake apparatus (4) has passed the at least one turbine (3) is calculated on the basis of the currently measured volume flow or the velocity of the works water (6) carrying the pollutants and the distance present between the rake apparatus (4) and the at least one turbine (3).

## Revendications

1. Procédé de pilotage d'une installation de génération hydroélectrique (1) avec une alimentation de génératrice (2) menant à au moins une turbine (3), à l'intérieur de laquelle est disposée un dispositif de grille de retenue (4) pour retenir des impuretés (11) entraînées par l'eau motrice (6) passant par l'alimentation de génératrice (2), dans lequel est exécuté au niveau de l'au moins une turbine (3), pendant une durée limitée, un programme de rinçage, c'est-à-dire un mode de conduite de la (des) turbine(s) (3) différent du fonctionnement normal de l'au moins une turbine (3) et permettant de détacher les impuretés adhérant à la turbine (3), **caractérisé en ce qu'**un degré d'encrassement du dispositif de grille de retenue (4) causé par des impuretés qui y adhèrent est déterminé et utilisé comme indicateur d'un degré d'encrassement de l'au moins une turbine (3), le programme de rinçage étant déclenché en fonction du degré d'encrassement détecté du dispositif de grille de retenue (4).

2. Procédé selon la revendication 1, **caractérisé en ce que** le degré d'encrassement du dispositif de grille de retenue (4) est déterminé à l'aide de la fréquence enregistrée sur un intervalle de temps défini d'une activation automatique ou manuelle d'un dispositif de nettoyage de la grille de retenue (5), au moyen duquel les impuretés adhérant au dispositif de grille de retenue (4) peuvent être enlevées.

3. Procédé selon la revendication 2, **caractérisé en ce que** le degré d'encrassement du dispositif de grille de retenue (4) est déterminé à l'aide d'un niveau (8, 9) de l'eau motrice (6) dans la zone du dispositif de grille de retenue (4), de préférence en fonction de moment où une différence définie est atteinte entre un niveau (8) en amont du dispositif de grille de retenue (4), vu dans le sens d'écoulement (10) de l'eau motrice (6), et un niveau (9) en aval du dispositif de grille de retenue (4).

4. Procédé selon la revendication 1, **caractérisé en ce que** la détection du degré d'encrassement du dispositif de grille de retenue (4) est réalisée par un traitement d'image assisté par une caméra.

5. Procédé selon la revendication 4, **caractérisé en ce qu'**une ou plusieurs sections choisies du dispositif de grille de retenue (4) sont utilisées pour la détection du degré d'encrassement du dispositif de grille de retenue (4).

6. Procédé selon l'une des revendications 1 à 5, **caractérisé en ce que** le programme de rinçage est déclenché quand le degré d'encrassement du dispositif de grille de retenue (4) a atteint une valeur limite définie.

7. Procédé selon l'une des revendications 1 à 5, **caractérisé en ce que** le programme de rinçage est déclenché avec un temps de latence par rapport au moment où il est constaté que le degré d'encrassement du dispositif de grille de retenue (4) a atteint une limite définie, le programme de rinçage étant de préférence exécuté avec un temps de latence en relation avec un nettoyage du dispositif de grille de retenue (4) réalisé au moyen du dispositif de nettoyage de la grille de retenue (5).

8. Procédé selon la revendication 7, **caractérisé en ce que** le programme de rinçage est exécuté après la fin d'un nettoyage du dispositif de grille de retenue (4) réalisé au moyen du dispositif de nettoyage de la grille de retenue (5).

9. Procédé selon la revendication 8, **caractérisé en ce que** le programme de rinçage n'est exécuté qu'à un moment où la majeure partie des impuretés détachées du dispositif de grille de retenue (4) au moyen du dispositif de nettoyage de la grille de retenue (5) a déjà franchi l'au moins une turbine (3).

10. Procédé selon la revendication 9, **caractérisé en ce que** le moment où la majeure partie des impuretés détachées du dispositif de grille de retenue (4) au moyen du dispositif de nettoyage de la grille de retenue (5) a franchi l'au moins une turbine (3) est calculé à l'aide du débit volumique ou de la vitesse de l'eau motrice (6) transportant les impuretés actuellement mesurés et de la distance entre le dispositif de grille de retenue (4) et l'au moins une turbine (3).
